Europäisches Patentamt

European Patent Office

Office européen des brevets

(11) Veröffentlichungsnummer: **0 405 054**
**A1**

(12) **EUROPÄISCHE PATENTANMELDUNG**

(21) Anmeldenummer: 90102618.7

(22) Anmeldetag: **10.02.90**

(51) Int. Cl.⁵: **G06K 1/12**, G06K 19/02,
G06K 19/07

(30) Priorität: 30.06.89 DE 3921469

(43) Veröffentlichungstag der Anmeldung:
**02.01.91 Patentblatt 91/01**

(84) Benannte Vertragsstaaten:
**AT BE CH DE ES FR GB GR IT LI LU NL SE**

(71) Anmelder: **TELENORMA GMBH**
**Mainzer Landstrasse 128-146**
**D-6000 Frankfurt/Main(DE)**

(72) Erfinder: **Moses, Klaus, Dipl.-Ing.**
**Am Honigbirnbaum 38**
**D-6232 Bad Soden 2(DE)**

(54) **Tragbarer Datenträger mit einem optischen Anzeigebereich.**

(57) Ein bekannter tragbare rDatenträger (D) weist einen durch das Terminal ansteuerbaren optischen Anzeigebereich auf, welcher als Flüssigkristallanzeige ausgebildet ist. Ohne Energiezufuhr bleibt die Anzeige bei einer Flüssigkristallanzeige nur kurze Zeit erhalten. Gemäß der Erfindung ist der optische Anzeigebereich (AZ) als Folie mit einer Schicht ausgebildet, welche durch unterschiedliche Temperaturen in den transparenten bzw. nichttransparenten Zustand veränderbar ist. Ist die Leseeinrichtung des Terminals mit einer entsprechenden Lösch- und Schreibvorrichtung versehen, dann läßt sich der Anzeigebereich des Datenträgers mit Informationen beschreiben, die auf unbeschränkte Zeit erhalten bleiben. Die Erfindung kann bei allen denkbaren Chip- und Magnetkarten angewendet werden, wobei dem Benutzer Rest-Einheiten oder Restbeträge optisch angezeigt werden können.

Fig. 2

## TRAGBARER DATENTRÄGER MIT EINEM OPTISCHEN ANZEIGEBEREICH

Die Erfindung betrifft einen tragbaren Datenträger mit einem Speicher zum Einspeichern von Informationen, beispielsweise eines Personenidentifikationskennzeichens zur Betätigung eines Terminals, wobei ein Teilbereich des Datenträgers als durch das Terminal ansteuerbarer optischer Anzeigebereich ausgebildet ist.

Ein derartiger tragbarer Datenträger ist bereits bekannt. So wird in der DE-PS 31 40 743 eine Kontrollkarte mit inkorporierten Identifikationskennzeichen zur Betätigung eines Terminals beschrieben, bei welcher ein Teilbereich als durch das Terminal ansteuerbarer optischer Anzeigebereich ausgebildet ist. Der Anzeigebereich wird elektrisch durch das die Kontrollkarte aufnehmende Terminal angesteuert. Der Anzeigebereich kann beispielsweise als Flüssigkristallzelle ausgebildet sein, wobei die Anzeige für kürzere oder längere Zeit sichtbar bleibt. Die Auslösung der Anzeige erfolgt immer durch den Kontakt der Kontrollkarte mit dem Terminal.

Die Aufgabe der Erfindung besteht nun darin, einen tragbaren Datenträger der eingangs genannten Art anzugeben, bei welchem die Anzeigevorrichtung einfacher gestaltet ist und ist und darüber hinaus die Anzeige auch auf unbeschränkte Zeit erhalten bleibt.

Diese Aufgabe wird dadurch gelöst, daß der optische Anzeigebereich als durch eine Folie abgedeckte Schicht ausgebildet ist, wobei die Schicht, ausgehend von einer ersten Temperatur (beispielsweise Zimmertemperatur) durch Erwärmung auf eine zweite Temperatur in einen ersten optischen Zustand, beispielsweise transparent, und durch Erwärmen auf eine dritte Temperatur in einen zweiten optischen Zustand, beispielsweise nichttransparent veränderbar ist und die Veränderbarkeit reversibel ist, daß durch entsprechende Erwärmung der Schicht In formationen auf diese aufgebracht bzw. auf dieser gelöscht werden, daß eine den tragbaren Datenträger aufnehmende Einrichtung mit Lösch- und/oder Druckvorrichtungen versehen ist und daß bedarfsweise durch die Löschvorrichtung die Schicht zunächst für einen kurzen Zeitraum auf eine bestimmte Temperatur und/oder durch die Druckvorrichtung die Schicht für einen kurzen Zeitraum auf eine bestimmte andere Temperatur derart erwärmt wird, daß die Information in nichttransparenter Form in transparenter Umgebung bzw. umgekehrt sichtbar ist.

Das den Datenträger aufnehmende Terminal muß lediglich mit einer entsprechenden thermischen Lösch- und Schreibvorrichtung versehen sein. Mit Hilfe der Anzeige kann dem Karteninhaber einer beispielsweise derart ausgestatteten Chip-Karte für Bankzwecke der Kontostand angezeigt werden. Bei Berechtigungskarten zur Benutzung von Kartentelefonen oder beispielsweise Kopiergeräten kann mit Hilfe der Anzeigevorrichtung der verbleibende Rest von Einheiten angezeigt werden.

Eine derartige Folie ist an sich bereits bekannt. So wird in den europäischen Patentschriften EP-PS 0 000 868 und 0 014 862 ein Körper mit reversiblen, fixierten und temperaturveränderlichen Lichtextinktionen beschrieben, welcher als löschbarer Aufzeichnungsträger bestehend aus einem Stoffpaar ausgebildet ist, welches beispielsweise beim Erwärmen vom Zustand maximaler Lichtextinktion aus bis zu einer unter einer Umwandlungstemperatur liegenden Klartemperatur und anschließendem Abkühlen unter einen unteren Temperaturwert eine kleiner werdende Lichtextinktion mit steigender Erwärmungstempera tur aufweist. Der Aufzeichnungs- und Löschvorgang läßt sich beliebig oft wiederholen, wobei die Aufzeichnung mittels fein gebündelter Wärme - oder Lichtstrahlung oder auch durch Kontaktwärme erfolgen kann.

Die Folie eignet sich somit als löschbarer Aufzeichnungsträger für Zahlen, Buchstaben, Bilder, Muster, usw. Dabei können die Aufzeichnungen sowohl im Positiv- als auch im Negativverfahren erfolgen, wenn die für die Aufzeichnung vorgeschriebenen Verfahrensschritte eingehalten werden.

Vorteilhafte Ausbildungen der Erfindung ergeben sich aus den Unteransprüchen.

Die Erfindung wird anhand eines Ausführungsbeispiels näher erläutert, welches in der Zeichnung dargestellt ist. Es zeigt:

Fig. 1 die graphische Darstellung der beiden Zustände der Schicht in Abhängigkeit von den unterschiedlichen Temperaturen,

Fig. 2 die Ansicht eines tragbaren Datenträgers und

Fig. 3 den Schichtaufbau.

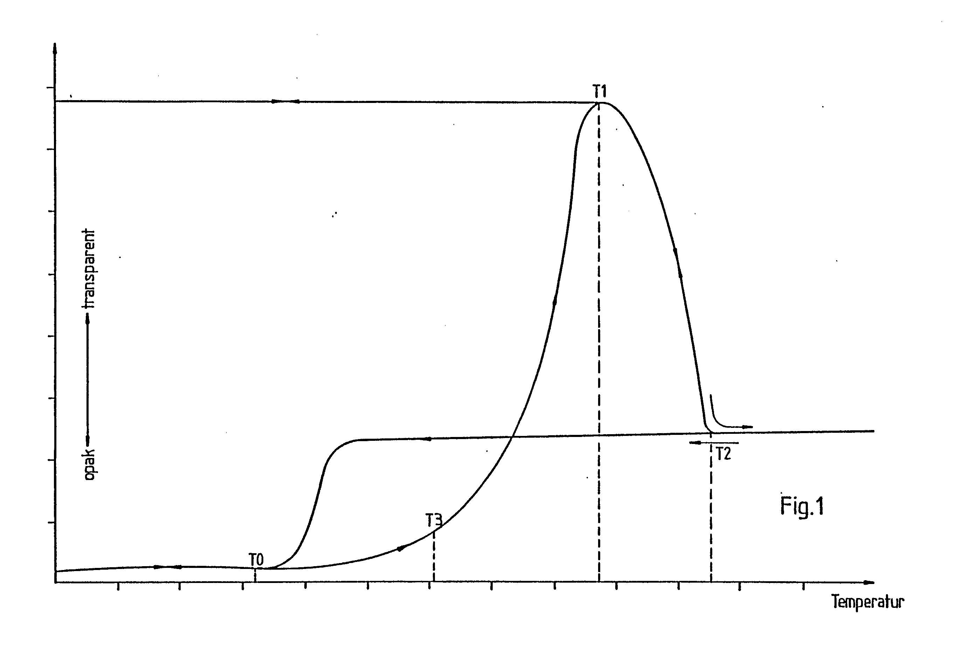

Die graphische Darstellung der beiden Zustände der Schicht, und zwar nichttransparent (opak) und transparent in Abhängigkeit von den unterschiedlichen Temperaturen zeigt deutlich, daß mindestens bis zu einer Temperatur T0 oder auch noch etwas darüber der nichttransparente Zustand der Schicht und der transparente Zustand der Schicht noch weit darüber hinaus in unveränderter Form erhalten bleibt (s. Fig. 1). Die Temperatur T0 liegt bei ungefähr 35 Grad Celsius. Zunächst wird die Schicht auf die Temperatur T2 erwärmt, diese entspricht beispielsweise einem Wert von 73 Grad C. oder auch noch darüber. Durch anschließendes Abkühlen auf die Temperatur T0 nimmt die Schicht den nichttransparenten Zustand an. Wird die Schicht anschließend auf die Temperatur T1 erwärmt, welche beispielsweise 64 Grad C entspricht, so wird die Schicht transparent und behält diesen Zustand auch bei Zimmertemperatur bei. Die aufzuzeichnenden Informationen können beispielsweise transparent in einer nichttransparenten Umgebung gekennzeichnet sein. Eine derartige, auf die Schicht aufgebrachte Information ist auf einem dunklem Untergrund mit vorzugsweise absorbierender Oberfläche für das menschliche Auge sehr gut lesbar.

Es ist ebenso möglich, den Schreibvorgang umzukehren und die beschriebene oder auch die unbeschriebene Schicht zunächst auf die Temperatur T1 zu erwärmen und diese in den transparenten Zustand zu überführen. Anschließend erfolgt das Aufzeichnen der Information mit der Temperatur T2, wonach dann anschließend eine beschriftete Schicht vorliegt, bei welcher die aufgezeichnete Information in nichttransparenter Form in transparenter Umgebung vorliegt. Auch eine derart auf die Schicht aufgebrachte Information ist auf einem dunklem Untergrund mit absorbierender Oberfläche für das menschliche Auge gut lesbar.

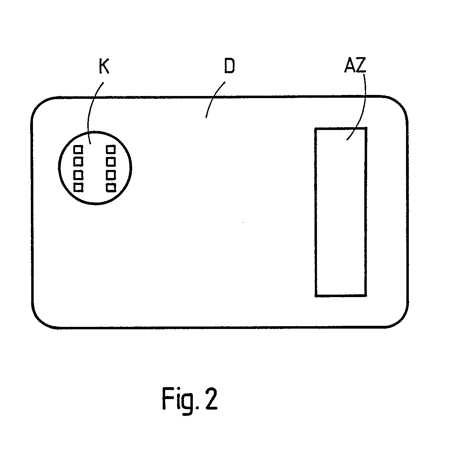

In Fig. 2 wird ein tragbarer Datenträger D in Form einer sogenannten Chip-Karte gezeigt. In den Datenträger D ist ein Speicher oder auch ein Mikroprozessor mit einem Speicher eingebettet, wobei die elektrischen Verbindungen zwischen der Elektronik des Kartenlesers und dem Speicher bzw. dem Mikroprozessor auf dem Datenträger D über die elektrischen Kontakte K hergestellt werden.

Der Datenträger D ist mit einem Anzeigebereich AZ versehen, wobei dieser durch die durch unterschiedliche Temperaturen in den transparenten bzw. nichttransparenten Zustand veränderbare Schicht gebildet wird. Die Erfindung ist nicht nur auf eine derartige Chip-Karte beschränkt, vielmehr kann diese auch auf Chip-Karten mit kontaktloser elektrischer Verbindung zwischen Speicher bzw. Mikroprozessor und Kartenleseelektronik angewendet werden. Ebenso ist die Verwendung der Erfindung bei einer mit einem Magnetstreifen ausgestatteten Karte oder auch auf Karten mit optisch lesbaren Informationen anzuwenden.

Die nicht gezeigte Kartenlesevorrichtung ist mit einer entsprechenden Lösch- und/oder Schreibvorrichtung versehen, welche zum Löschen bzw. Beschreiben des Anzeigebereichs AZ dient. Dies kann nun entweder im stationären Zustand der Karte durch entsprechende Lösch- und Schreibvorrichtungen geschehen, deren Temperaturen umschaltbar sein können oder in dem die Karte unter einer festen Lösch- und Schreibvorrichtung vorbeibewegt wird.

Der Datenträger kann auch unterhalb des Anzeigebereichs AZ mit einer Widerstandsschicht versehen sein, welche entweder mit einem in den Datenträger integrierten Energiespeicher oder mit den elektrischen Kontakten K elektrisch verbunden ist. Über die Kontakte K kann durch Fließen eines entsprechenden elektrischen Stroms über die Widerstandsschicht auf Veranlassung der Kartenlesevorrichtung die Schicht derart erwärmt werden, daß die in der Schicht enthaltene Information gelöscht wird. Ist in dem Datenträger D ein Energiespeicher enthalten, so kann über ein in den Datenträger D nicht gezeigtes integriertes, von Hand betätigbares Schaltmittel, beispielsweise Folienkontakt, der Löschvorgang manuell durchgeführt werden. Hierdurch besteht für den Karteninhaber die Möglichkeit, vertrauliche Informationen, d.h. durch die Kartenlesevorrichtung aufgebrachte Informationen selbst zu löschen. Die Widerstandsschicht kann auch dazu benutzt werden, den Schreibvorgang zu unterstützen, indem durch die Widerstandsschicht die Schicht vorgewärmt wird, so daß die Schreibvorrichtung selbst nicht mehr auf die Temperatur erwärmt werden muß, welche für den Schreibvorgang notwendig ist.

Während die Löschvorrichtung der Kartenleseeinrichtung aus einem Infrarot-Strahler oder auch aus einer drehbaren Walze, welche über das Anzeigefeld AZ bewegt wird, * kann das Aufbringen von Informationen auf die Schicht, beispielsweise durch einen sogenannten Thermokopf geschehen, wie er beispielsweise in der DE-PS 31 25 259 beschrieben ist. Derartige Thermoköpfe weisen streifen oder matrixförmig angeordnete erwärmbare kleine Flächen auf, welche entsprechend angesteuert durch Erwärmen die abzubildenden Buchstaben, Ziffern und Zeichen bilden.

Der Anzeigebereich AZ kann auch in einer Vertiefung des Trägerkörpers angebracht sein, wobei nach Einlegen einer die Schicht tragende Folie in die Vertiefung die Oberseite derselben mit der Oberfläche des Datenträgers abschließt. Die Schicht mit ihrer Abdeckfolie kann auch über die gesamte Oberfläche des Datenträgers, und zwar auf der einen oder auch auf beiden Seiten angebracht sein, wobei die durch unterschiedliche Temperaturen veränderbare Schicht auch auf einen oder mehrere bestimmte Bereiche des Datenträgers D beschränkt sein kann (Fig. 2).

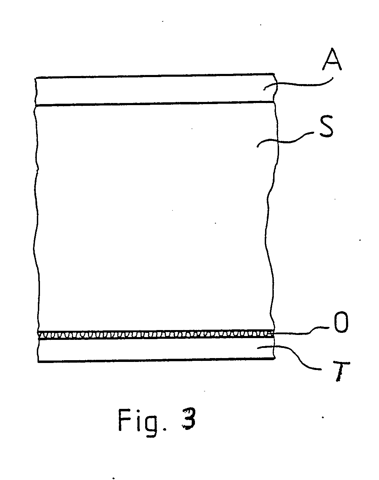

Die durch thermische Einwirkung in ihrem optischen Verhalten veränderbare Schicht S ist auf einem Trägerkörper T, welcher als Folie oder auch als Körper des Datenträgers ausgebildet sein kann, aufgebracht. Abgedeckt wird die Schicht S durch eine Abdeckfolie A. Zur besseren Lesbarkeit der in die Schicht eingebrachten Informationen kann zwischen der Schicht S und dem Träger T entweder eine zusätzliche Folie O angebracht sein, welche

* bestehen kann

dunkel Gefärbt ist und eine absorbierende Oberfläche aufweist oder die Oberfläche des Trägers T kann entsprechend ausgestaltet sein. Mit dieser dunklen Schicht kann die Lesbarkeit gesteigert werden. Es ist jedoch auch denkbar, die die Schicht tragende Folie über einen von der Unterseite zur Oberseite des Trägerkörpers des Datenträgers D reichenden Durchbruch anzubringen, welcher das Anzeigefeld AZ bildet (s. Fig. 2). Dabei bleibt es dem Benutzer überlassen, welcher Untergrund oder Hintergrund zum Lesen der Information in der Schicht benutzt wird (Fig. 3).

Die Schicht S kann auch auf der gesamten Ober- und/oder Unterseite des Datenträgers D angebracht sein, wobei nur ein Teil der Fläche als Anzeigefläche AZ benutzt wird, während der übrige Teil beispielsweise als Reklamefläche dienen kann, die nur einmal oder in großen Abständen beschrieben wird (Fig. 2)

Ein derart ausgestatteter Datenträger kann für die vielfältigsten Zwecke eingesetzt werden. Dem Karteninhaber können Kontostände, Rest-Einheiten, Rest-Guthaben, Kreditlimits, usw., angezeigt werden, wobei die Anzeige dauerhaft und durch das Terminal jederzeit veränderbar bzw. löschbar oder auch durch den Benutzer löschbar ist.

Die Erfindung ist nicht nur auf auf Verwendung solcher Stoffe mit einem Verhalten gemäß Fig. 1 und dazugehöriger Beschreibung beschränkt. Vielmehr können auch solche Stoffe Verwendung finden, bei denen die optische Eigenschaften in Abhängigkeit von den jeweiligen Temperaturen andersartig zugeordnet sind.

**Ansprüche**

1.Tragbarer Datenträger mit einem Speicher zum Einspeichern von Informationen, beispielssweise eines Personenidentifkationskennzeichens zur Betätigung eines Terminals, wobei ein Teilbereich des Datenträgers als durch das Terminal ansteuerbarer optischer Anzeigebereich ausgebildet ist,
dadurch gekennzeichnet,
daß der optische Anzeigebereich (AZ) als durch eine Folie abgedeckte Schicht (S) ausgebildet ist, wobei die Schicht (S) ausgehend von einer ersten Temperatur (beispielsweise Zimmertemperatur) durch Erwärmung auf eine zweite Temperatur in einen ersten optischen Zustand, beispielsweise transparent, und durch Erwärmen auf eine dritte Temperatur in einen zweiten optischen Zustand, beispielsweise nichttransparent, veränderbar ist und die Veränderbarkeit reversibel ist,
daß durch entsprechende Erwärmung der Schicht (S) Informationen auf diese aufgebracht bzw. auf dieser gelöscht werden, daß eine, den tragbaren Datenträger (D) aufnehmende Einrichtung mit Lösch- und/oder Druckvorrichtungen versehen ist und daß bedarfsweise durch die Löschvorrichtung die Schicht (S) zunächst für einen kurzen Zeitraum auf eine bestimmte Temperatur und/oder durch die Druckvorrichtung die Schicht (S) für einen kurzen Zeitraum auf eine bestimmte andere Temperatur derart erwärmt wird, daß die Informationen in nichttransparenter Form in transparenter Umgebung bzw. umgekehrt sichtbar ist.

2. Tragbarer Datenträger nach Anspruch 1,
dadurch gekennzeichnet,
daß der Körper des Datenträgers (D) eine Vertiefung aufweist, welche die Schicht (S) aufnimmt, wobei die Vertiefung derart ausgebildet ist; daß die eingesetzte Schicht (S) mit einer Abdeckfolie (A) bündig mit der Oberfläche des Körpers des Datenträgers (D) abschließt.

3. Tragbarer Datenträger nach Anspruch 1,
dadurch gekennzeichnet,
daß die Schicht (S) auf der gesamten Oberfläche der einen oder beider Seiten des Datenträgers (D) angebracht ist, wobei die Anzeigefläche (AZ) auf einen oder mehrere bestimmte Bereiche des Datenträgers beschränkt sein kann.

4. Tragbarer Datenträger nach einem der Ansprüche 1 bis 3,
dadurch gekennzeichnet,
daß zwischen der Schicht (S) und dem Datenträger (D) eine weitere dunkle Schicht (O) mit rauher Oberfläche angebracht ist.

5. Tragbarer Datenträger mit elektrischen Anschlüssen nach einem der Ansprüche 1 bis 4,
dadurch gekennzeichnet,
daß unterhalb der Schicht (S) eine Widerstandsschicht angebracht ist, welche mit den elektrischen Anschlüssen (K) in Verbindung steht, wobei durch Fließen eines elektrischen Stroms die Widerstandsschicht auf eine solche Temperatur erwärmt wird, daß die in die Schicht (S) eingebrachte Information gelöscht wird.

6. Tragbarer Datenträger nach Anspruch 5,
dadurch gekennzeichnet,
daß die Widerstandsschicht vor bzw. während des Schreibvorgangs auf eine Temperatur gebracht wird, welche unterhalb der Schreibtemperatur liegt.

7. Tragbarer Datenträger nach Anspruch 5,
dadurch gekennzeichnet,
daß ein elektrischer Energiespeicher vorgesehen ist, welcher über ein manuell betätigbares Schaltmittel mit der Widerstandsschicht verbindbar ist.

8. Tragbarer Datenträger nach Anspruch 7,
dadurch gekennzeichnet,
daß der elektrische Energiespeicher über die elektrischen Anschlüsse (K) aufladbar ist.

9. Tragbarer Datenträger nach einem der Ansprüche 1 bis 8,
dadurch gekennzeichnet,
daß die Folie (A) mit der Schicht (S) über einem von der Unterseite zur Oberseite des Datenträgers (D) reichenden Durchbruch angebracht ist.

10. Tragbarer Datenträger nach Anspruch 1, dadurch gekennzeichnet, daß die den Datenträger (D) aufnehmende Einrichtung eine Kartenleseeinrichtung des Terminals ist.

Fig.1

transparent

opak

Temperatur

T1

T0

T3

T2

EP 0 405 054 A1

Fig. 2

Fig. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 060 650 (JOHNSON MATTHEY PUBLIC LIMITED COMP.) * Seite 2, Zeile 27 - Seite 3, Zeile 5; Seite 3, Zeilen 11-30; Seite 4, Zeile 15 - Seite 5, Zeile 6; Seite 6, Zeilen 8-15; Seite 6, Zeilen 19-29; Seite 8, Zeilen 1-3; Seite 8, Zeilen 17-19; Seite 10, Zeilen 27-30; Seite 11, Zeilen 6-8; Ansprüche 1,3,4,17,19 * --- | 1,10 | G 06 K 1/12 G 06 K 19/02 G 06 K 19/07 |
| A | EP-A-0 014 826 (TIPP-EX TECH. W. DABISCH) * Figuren 1-4; Zusammenfassung; Seite 3, Zeilen 5-15; Seite 3, Zeilen 33-36; Seite 5, Zeilen 21-33; Seite 10, Zeilen 14-28; Seite 13, Zeilen 11-16 * --- | 1 | |
| A | PATENT ABSTRACTS OF JAPAN Band 7, Nr. 282 (P-243)(1427), 16. Dezember 1983; & JP-A-58159195 (NIHON KOUGAKU KOGYO) 21.09.1983 --- | 5,7 | |
| A | GB-A-2 164 466 (NAT. RES. DEV. CORP.) * Figuren 1,5; Zusammenfassung; Seite 1, Zeilen 37-52; Seite 2, Zeilen 79-98; Seite 3, Zeilen 90-93; Seite 6, Zeilen 77-99; Seite 7, Zeilen 3-20 * --- | 1-10 | |
| A | EP-A-0 242 126 (MITSUBISHI DENKI) * Figuren 1-4; Zusammenfassung; Spalte 3, Zeilen 30-35; Ansprüche 1,4,5 * ----- | 1-10 | |

RECHERCHIERTE SACHGEBIETE (Int. Cl.5)

G 01 K
G 06 K
G 02 F
B 41 M

Der vorliegende Recherchenbericht wurde für alle Patentansprüche erstellt

| Recherchenort | Abschlußdatum der Recherche | Prüfer |
|---|---|---|
| BERLIN | 10-10-1990 | FRITZ S C |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

........................................................
& : Mitglied der gleichen Patentfamilie, übereinstimmendes Dokument

EPO FORM 1503 03.82 (P0403)